# EUROPÄISCHE PATENTSCHRIFT

(11) **EP 3 990 318 B1**
(45) Veröffentlichungstag und Bekanntmachung des Hinweises auf die Patenterteilung: **29.04.2026**
(21) Anmeldenummer: 20774920.1
(22) Anmeldetag: 15.09.2020
(51) Int. Cl.: B60S 1/50, F02M 25/025, F02M 25/022, C02F 1/00, C02F 1/42

(54) **KRAFTFAHRZEUG MIT EINER WASSERBEREITSTELLUNGSEINRICHTUNG SOWIE VERFAHREN ZUM BETREIBEN EINES KRAFTFAHRZEUGS**
MOTOR VEHICLE COMPRISING A WATER PROVISION UNIT AND METHOD FOR OPERATING A MOTOR VEHICLE
VÉHICULE À MOTEUR COMPRENANT UNE UNITÉ DE FOURNITURE D'EAU ET PROCÉDÉ POUR FAIRE FONCTIONNER UN VÉHICULE À MOTEUR

(30) Priorität: 16.09.2019 DE 102019124791
(43) Veröffentlichungstag der Anmeldung: 04.05.2022
(73) Patentinhaber: Audi AG, 85057 Ingolstadt (DE)
(72) Erfinder: HANISCH, Thomas, 91795 Dollnstein (DE)
(74) Vertreter: Dietz, Christopher Friedrich
(86) Internationale Anmeldenummer: PCT/EP2020/075688
(87) Internationale Veröffentlichungsnummer: WO 2021/052920

(56) Entgegenhaltungen:
- CN-A- 104 005 819
- DE-A1- 102014 100 307
- DE-A1- 102016 205 103
- DE-A1- 102017 202 430
- DE-A1- 102017 210 487
- DE-A1- 102018 201 564
- US-A1- 2017 107 950
- US-A1- 2017 306 892

## Beschreibung

Die Erfindung betrifft ein Kraftfahrzeug mit einer Wasserbereitstellungseinrichtung zur Bereitstellung von Wasser für wenigstens einen Wasserverbraucher, mit einem Wassersammeltank, einem Wasserprimärtank, mehreren über eine Verbindungsleitung an den Wassersammeltank strömungstechnisch angeschlossene Wassersekundärtanks, und einer Umgehungsleitung, die einerseits in den Wasserprimärtank und andererseits in die Verbindungsleitung einmündet und in der ein Schaltventil angeordnet ist, wobei der Wassersammeltank an eine Wasserquelle strömungstechnisch angeschlossen oder anschließbar ist und der Wasserprimärtank unter Umgehung des Wassersammeltanks und der Wassersekundärtanks an den wenigstens einen Wasserverbraucher strömungstechnisch angeschlossen ist, wobei die Wasserbereitstellungseinrichtung eine Wasserfördereinrichtung aufweist, die zur Förderung des Wassers aus dem Wassersammeltank in Richtung des Wasserprimärtanks mittels eines gasförmigen Fördermediums vorgesehen und ausgebildet ist, wobei an den Wasserprimärtank eine Unterdruckpumpe zur Förderung des gasförmigen Fördermediums aus dem Wassersammeltank strömungstechnisch angeschlossen ist und/oder an den Wassersammeltank eine Überdruckbereitstellungseinrichtung zur Förderung des gasförmigen Fördermediums in Richtung des Wasserprimärtanks strömungstechnisch angeschlossen ist. Weiterhin betrifft die Erfindung ein Verfahren zum Betreiben eines Kraftfahrzeugs.

Aus dem Stand der Technik ist beispielsweise die Druckschrift US 10 018 156 B1 bekannt. Diese beschreibt ein Verfahren und eine Einrichtung zur Wassereinspritzung in eine Brennkraftmaschine.

Die Druckschrift US 2014 / 0 165 948 A1 beschriebt einen Einlasskrümmer, der geeignet ist, Öl oder Wasser aus einem Flüssigkeitsspeicher gleichförmig freizusetzen. Der Einlasskrümmer weist einen Einleitabschnitt zum Einleiten von Luft in eine Brennkammer eines Motors, einen unter dem Einleitabschnitt angeordneten Flüssigkeitsspeicher zum Vorhalten eines flüssigen Mediums, einen Differenzdrucktank mit einer ersten Kammer, einer zweiten Kammer und einem Differenzdruckventil zum Regeln eines Durchflusses von der zweiten Kammer in die erste Kammer, eine Rückführleitung, die es dem in dem Flüssigkeitsspeicher angesammelten flüssigen Medium erlaubt aus dem Flüssigkeitsspeicher zurück in die erste Kammer zu gelangen, wenn der Druck in der zweiten Kammer größer ist als der Druck in der ersten Kammer, und eine Abgasleitung zum Freisetzen des von dem ersten Kammer in die zweite Kammer geströmten flüssigen Mediums in den Einleitabschnitt, wenn der Druck in der zweiten Kammer kleiner ist als der Druck in der ersten Kammer.

Weiterhin ist aus dem Stand der Technik die Druckschrift DE 102019 105 194 A1 bekannt. Diese beschreibt ein Verfahren und ein System zur Wassernutzung an Bord eines Fahrzeugs. Dabei werden Verfahren zum Optimieren der Nutzung von an Bord eines Fahrzeugs gewonnenem oder erzeugtem Wasser bereitgestellt. Eine zu Einspritz- oder Sprühzwecken ausgewählte Wassermenge sowie eine Reihenfolge der Wassereinspritzung als Reaktion auf verschiedene Fahrzeugbetriebsbedingungen werden auf Grundlage der zuzuführenden Wassermenge sowie eines aktuellen Wasserstands in Bezug auf einen vorhergesagten künftigen Wasserstand variiert. Das Verfahren ermöglicht, dass Wassernutzungsvorteile insbesondere dann maximiert werden, wenn die Wasserverfügbarkeit begrenzt ist.

Die Druckschrift CN 104 005 819 A offenbart ein Harnstoffdosiersystem mit zwei Harnstoffdruckbehältern. Das System ist mit einem ersten Harnstoffdruckbehälter und einem zweiten Harnstoffdruckbehälter ausgestattet, wobei der erste Harnstoffdruckbehälter und der zweite Harnstoffdruckbehälter jeweils mit einer Druckluftquelle verbunden sind, um als Harnstoffzufuhrvorrichtung verwendet zu werden, und der zweite Harnstoffdruckbehälter für die Harnstoffeinspritzfunktion verwendet wird. Der erste Harnstoffdruckbehälter und der zweite Harnstoffdruckbehälter sind jeweils mit elektromagnetischen Ventilen versehen, die mit der Druckluftquelle verbunden sind und mit elektromagnetischen Entleerungsventilen versehen sind. Der erste Harnstoffdruckbehälter ist mit dem zweiten Harnstoffdruckbehälter über die elektromagnetischen Ventile verbunden. Der erste Harnstoffdruckbehälter ist mit der Harnstoffversorgungseinrichtung verbunden. Der zweite Harnstoffdruckbehälter ist mit einer Harnstoffeinspritzvorrichtung verbunden. Eine Steuerung ist elektrisch mit den elektromagnetischen Ventilen verbunden und steuert das Betätigen der elektromagnetischen Ventile. Durch die Steuerung eines elektromagnetischen Lufteinlassventils und eines elektromagnetischen Luftauslassventils wird ein konstanter Luftdruck erzeugt, der zur Druckbeaufschlagung einer Harnstofflösung verwendet wird. Da der Druck am Einlass der Harnstoffdüse konstant ist, wird die durch die Impulseinspritzung der Harnstofflösung verursachte Druckwelle deutlich reduziert und die Dosiergenauigkeit und Stabilität der Einspritzmenge der Harnstofflösung verbessert.

Weiterhin sind aus dem Stand der Technik die Druckschriften DE 10 2014 100307 A1, US 2017/306892 A1 und DE 10 2017 202 430 A1 bekannt.

Es ist Aufgabe der Erfindung, ein Kraftfahrzeug mit einer Wasserbereitstellungseinrichtung vorzuschlagen, welches gegenüber bekannten Kraftfahrzeugen Vorteile aufweist, insbesondere eine besonders zuverlässige Bereitstellung des Wassers bei gleichzeitig flexibler Anordnung der Tanks des Kraftfahrzeugs ermöglicht.

Dies wird erfindungsgemäß mit einem Kraftfahrzeug mit den Merkmalen des Anspruchs 1 erreicht. Dabei ist vorgesehen, dass der Wassersammeltank sowohl unmittelbar über die Umgehungsleitung als auch mittelbar über die Wassersekundärtanks strömungstechnisch an den Wasserprimärtank angeschlossen ist, wobei die Wassersekundärtanks über die Zuführleitung strömungstechnisch in Reihe geschaltet sind und der Wasserprimärtank über die Zuführleitung an genau einen des Wassersekundärtanks strömungstechnisch unmittelbar angeschlossen ist.

Das Kraftfahrzeug weist die Wasserbereitstellungseinrichtung und den wenigstens einen Wasserverbraucher auf. Grundsätzlich kann eine beliebige Anzahl an Wasserverbrauchern vorliegen, beispielsweise lediglich ein einziger Wasserverbraucher oder mehrere Wasserverbraucher. Sofern im Rahmen dieser Beschreibung lediglich von dem Wasserverbraucher oder dem wenigstens einen Wasserverbraucher die Rede ist, so sind die Ausführungen stets analog. Im Falle der mehreren Wasserverbraucher sind die Ausführungen für den Wasserverbraucher beziehungsweise den wenigstens einen Wasserverbraucher bevorzugt zudem auf mehrere der Wasserverbraucher oder jeden der Wasserverbraucher anwendbar.

Der Wasserverbraucher kann grundsätzlich beliebig ausgestaltet sein. Beispielsweise liegt er in Form einer Reinigungsanlage, insbesondere einer Scheibenwaschanlage, vor. In diesem Fall dient das Wasser der Reinigung des Kraftfahrzeugs, insbesondere einer Scheibe des Kraftfahrzeugs. Hierzu wird das Wasser auf eine Oberfläche des Kraftfahrzeugs, insbesondere auf die Scheibe, aufgebracht, insbesondere aufgesprüht oder aufgespritzt. Zu diesem Zweck wird das Wasser beispielsweise über wenigstens eine Düse oder dergleichen ausgebracht. Beispielsweise wird das Wasser vor seinem Ausbringen mit einem Reinigungsmittel und/oder einem Frostschutzmittel versetzt.

Besonders bevorzugt ist der Wasserverbraucher jedoch eine Wassereinspritzung einer Antriebseinrichtung des Kraftfahrzeugs. Die Antriebseinrichtung dient dem Antreiben des Kraftfahrzeugs und insoweit dem Bereitstellen eines auf das Antreiben des Kraftfahrzeugs gerichteten Antriebsdrehmoments. Die Antriebseinrichtung weist wenigstens ein Antriebsaggregat auf, welches bevorzugt in Form einer Brennkraftmaschine vorliegt. Die Brennkraftmaschine verfügt über wenigstens einen Brennraum, in welchem Kraftstoff zusammen mit Sauerstoff verbrannt wird. Zur Erhöhung der Leistung und/oder der Effizienz des Antriebsaggregats und/oder zu seiner Kühlung ist es im Rahmen der Wassereinspritzung vorgesehen, das Wasser zumindest zeitweise der Brennkraftmaschine zuzuführen, insbesondere dem Brennraum zuzuführen.

Beispielsweise wird das Wasser hierbei unmittelbar oder lediglich mittelbar, beispielsweise über ein Saugrohr der Brennkraftmaschine, in den Brennraum eingebracht. In letzterem Fall mündet beispielsweise eine Einspritzdüse, durch welche das Wasser in den Brennraum eingebracht wird, unmittelbar in den Brennraum ein. Im Falle der unmittelbaren Einbringung mündet die Einspritzdüse beispielsweise in das Saugrohr der Brennkraftmaschine ein, welches über wenigstens ein Gaswechselventil, insbesondere ein Einlassventil, strömungstechnisch an den Brennraum angeschlossen ist. Bei geöffnetem Gaswechselventil strömt insoweit das in das Saugrohr eingespritzte Wasser zusammen mit Frischgas in den Brennraum ein.

Üblicherweise ist es vorgesehen, dass der Wasserbereitstellungseinrichtung durch einen Benutzer des Kraftfahrzeugs von Zeit zu Zeit Wasser zugeführt wird. Dies ist bei derzeitigen Kraftfahrzeugen mit einigem Aufwand verbunden. So müssen üblicherweise zuerst der Motorraum und anschließend ein Vorratsbehälter für das Wasser geöffnet und dann durch eine Einfüllöffnung das Wasser in den Vorratsbehälter eingefüllt werden, beispielsweise unter Zuhilfenahme einer Wasserkanne oder dergleichen. Insbesondere im Falle der Ausgestaltung des wenigstens einen Wasserverbrauchers als Reinigungseinrichtung wird dem Wasser zudem optional das Reinigungsmittel und/oder das Frostschutzmittel beigemengt. Dies erfordert zusätzliche Arbeitsschritte.

Erst anschließend werden der Vorratsbehälter und der Motorraum wieder geschlossen und der Wasserverbraucher kann genutzt werden. Der Vorratsbehälter muss entsprechend im Motorraum des Kraftfahrzeugs angeordnet sein und ein Volumen aufweisen, welches die Benutzung des Wasserverbrauchers über einen sinnvollen Zeitraum hinweg ermöglicht. Dies bedeutet, dass der für den Vorratsbehälter in dem Motorraum aufgewandte Bauraum nicht für andere Zwecke zur Verfügung steht, insbesondere weil der Vorratsbehälter durch den Benutzer befüllbar sein soll und gleichzeitig eine ausreichende Größe aufweisen muss.

Aus diesem Grund sind erfindungsgemäß der Wassersammeltank, der Wasserprimärtank und der Wassersekundärtank Bestandteil des Kraftfahrzeugs. Der Wassersammeltank entspricht von seiner Ausgestaltung am ehesten dem Vorratsbehälter, nämlich insoweit, dass er an die Wasserquelle strömungstechnisch angeschlossen oder anschließbar ist. Beispielsweise ist also dem Wassersammeltank durch den Benutzer manuell Wasser zuführbar. Besonders bevorzugt weist er hierzu eine standardisierte Schnittstelle auf, welche mit einer Schlauchkupplung verbindbar ist. Als Beispiel dient hierbei beispielsweise eine standardisierte Schlauchkupplung, wie sie im Haushalts- beziehungsweise Gartenbereich üblich ist. Die Wasserquelle ist in diesem Fall beispielsweise ein Wasserhahn oder dergleichen.

Zusätzlich oder alternativ wird als Wasserquelle eine bordeigene Wasserquelle des Kraftfahrzeugs verwendet. Eine solche bordeigene Wasserquelle ist beispielsweise eine Sammeleinrichtung für Oberflächenwasser, insbesondere von Regenwasser, welches aus einer Außenumgebung des Kraftfahrzeugs auf dieses trifft. Ebenso kann sie eine Sammeleinrichtung für an beziehungsweise in dem Kraftfahrzeug anfallendes Kondensat sein. Die Sammeleinrichtung ist insbesondere zum Sammeln von Kondensat vorgesehen und ausgebildet, welches während eines Betriebs einer optionalen Klimaanlage des Kraftfahrzeugs anfällt. Das Kondensat kann jedoch auch aus Abgas der Antriebseinrichtung beziehungsweise des Antriebsaggregats gewonnen werden. Zusätzlich oder alternativ wird Prozesswasser beispielsweise eines Wasserstoffantriebs gesammelt und dem Wassersammeltank zugeführt.

Der Wassersammeltank dient hierbei zunächst lediglich einem ersten Aufnehmen des Wassers und nicht etwa einer Bevorratung des Wassers bis dieses von dem Wasserverbraucher benötigt wird. Vielmehr wird das Wasser aus dem Wassersammeltank rasch weiterbefördert, nämlich in den Wasserprimärtank und/oder in den Wassersekundärtank und/oder in einen Wasserarbeitstank. Insbesondere falls die Wasserquelle als bordeigene Wasserquelle vorliegt, kann das Volumen des Wassersammeltanks gegenüber dem üblichen Vorratsbehälter deutlich reduziert werden. Beispielsweise weist der Wassersammeltank ein Volumen von höchstens 5 l, höchstens 2,5 l, höchstens 2 l, höchstens 1,5 l oder höchstens 1 l auf.

Der Wasserprimärtank dient dem Bereitstellen des Wassers für den wenigstens einen Wasserverbraucher. Entsprechend ist er derart an den Wasserverbraucher strömungstechnisch angeschlossen, dass das in dem Wasserprimärtank vorliegende Wasser direkt, also nicht über den Wassersammeltank und den Wassersekundärtank, dem Wasserverbraucher zuführbar ist. Die strömungstechnische Verbindung zwischen dem Wasserprimärtank und dem Wasserverbraucher verläuft demnach nicht über den Wassersammeltank und den Wassersekundärtank, sondern umgeht diese. Der Wasserprimärtank weist beispielsweise ein ähnliches Volumen auf wie der Wassersammeltank, insbesondere das gleiche Volumen. Beispielsweise beträgt das Volumen des Wasserprimärtanks höchstens 10 l, höchstens 7,5 l, höchstens 5 l oder höchstens 2,5 l.

Zusätzlich zu dem Wassersammeltank und dem Wasserprimärtank verfügt das Kraftfahrzeug über mehrere Wassersekundärtanks. Das bedeutet, dass genau zwei Wassersekundärtanks oder mehrere Wassersekundärtanks vorgesehen sein können. Falls im Rahmen dieser Beschreibung von dem Wassersekundärtank oder dem wenigstens einen Wassersekundärtank die Rede ist, so sind die Ausführungen stets gleichbedeutend. Im Falle der mehreren Wassersekundärtanks sind die Ausführungen für den Wassersekundärtank beziehungsweise den wenigstens einen Wassersekundärtank stets bevorzugt auf mehrere der Wassersekundärtanks oder jeden der Wassersekundärtanks übertragbar. Der Wassersekundärtank erhöht das für das Wasser zur Verfügung stehende Speichervolumen. Beispielsweise weist der Wassersekundärtank ein Volumen von höchstens 10 l, höchstens 7,5 l, höchstens 5 l oder höchstens 2,5 l auf.

Der Wasserprimärtank und insbesondere der Wassersekundärtank sind bevorzugt in einem Strukturbauteil beziehungsweise einem Karosseriebauteil des Kraftfahrzeugs angeordnet. Beispielsweise liegen der Wasserprimärtank und/oder der Wassersekundärtank in einer Strebe des Kraftfahrzeugs oder dergleichen vor, ist also zumindest in Umfangsrichtung zumindest bereichsweise von einem tragenden Bauteil des Kraftfahrzeugs, welches bevorzugt aus Metall besteht, umgeben. Hierdurch kann eine besonders hohe Platzeffizienz erzielt werden, bei gleichzeitig einfacher Nachfüllbarkeit. Hierzu kann der Wassersammeltank analog zu dem Vorratsbehälter weiterhin in dem Motorraum des Kraftfahrzeugs vorliegen, jedoch mit einem vergleichsweise kleinen Volumen ausgeführt sein.

Um eine besonders rasche Bereitstellung des Wassers sicherzustellen, ist der Wassersammeltank strömungstechnisch unmittelbar an den Wasserprimärtank angeschlossen. Das in dem Wassersammeltank vorliegende Wasser wird insoweit zumindest zeitweise unter Umgehung des Wassersekundärtanks dem Wasserprimärtank zugeführt. Um dennoch das Speichervolumen des Wassersekundärtanks nutzbar zu machen, ist der Wassersammeltank zusätzlich über den wenigstens einen Wassersekundärtank strömungstechnisch an den Wasserprimärtank angeschlossen. Zumindest zeitweise wird also das Wasser aus dem Wassersammeltank dem Wassersekundärtank zugeführt, insbesondere über den Wassersekundärtank dem Wasserprimärtank zugeführt.

Es liegen mehrere Wassersekundärtanks vor, diese sind strömungstechnisch in Reihe miteinander geschaltet, sodass also der Wassersammeltank über eine Reihenschaltung mehrerer Wassersekundärtanks strömungstechnisch an den Wasserprimärtank angeschlossen ist. Hierdurch können die Wassersekundärtanks einzeln betrachtet ein geringes Volumen aufweisen, in Summe betrachtet jedoch ein großes Speichervolumen für Wasser bereitstellen.

Besonders bevorzugt sind zudem wenigstens zwei der mehreren Wassersekundärtanks strömungstechnisch parallel zueinander angeschlossen. Das bedeutet, dass die Wassersekundärtanks also nicht nur strömungstechnisch in Reihe geschaltet sind, sondern zusätzlich auch in Parallelschaltung zueinander vorliegen. Hierdurch wird eine besonders zuverlässige Wasserversorgung des Wasserprimärtanks mit Wasser aus dem Wassersammeltank sichergestellt, insbesondere liegt in der Strömungsverbindung zwischen dem Wassersammeltank und dem Wasserprimärtank über den wenigstens einen Wassersekundärtank ein geringer Druckverlust vor, weil das Wasser aufgrund der zusätzlichen Parallelschaltung der Wassersekundärtanks nicht notwendigerweise jeden der Wassersekundärtanks durchströmen muss, um aus dem Wassersammeltank in den Wasserprimärtank zu gelangen. Vielmehr kann es hierbei einen oder mehrere der Wassersekundärtanks strömungstechnisch umgehen.

Da schlussendlich der Wasserprimärtank zur direkten Bereitstellung des Wassers für den Wasserverbraucher dient, ist ein Fördern des Wassers zwischen dem Wassersammeltank und den Wasserprimärtank, insbesondere über den wenigstens einen Wassersekundärtank, lediglich mit einem vergleichsweise geringen Fördermassenstrom notwendig. Beispielsweise wird dem Wasserverbraucher zumindest zeitweise ein bestimmter Entnahmemassenstrom an Wasser zugeführt, insbesondere aus dem Wasserprimärtank. Das Fördern des Wassers aus dem Wassersammeltank in den Wasserprimärtank, insbesondere über den Wassersekundärtank, erfolgt jedoch mit einem geringeren Fördermassenstrom, welcher bezogen auf den Entnahmemassenstrom beispielsweise höchstens 75 %, höchstens 50 % oder höchstens 25 % beträgt.

Aufgrund des geringen Fördermassenstroms ist zum Fördern des Wassers zwischen den einzelnen Tanks keine Pumpe notwendig, sodass das Fördern des Wassers aus dem Wassersammeltank in den Wasserprimärtank, insbesondere über den Wassersekundärtank, zumindest zeitweise pumpenlos erfolgt, nämlich mittels der Wasserfördereinrichtung, die das Wasser mithilfe des gasförmigen Fördermediums fördert. Hierunter ist zu verstehen, dass zumindest einem der Tanks ein Überdruck und/oder einem anderen der Tanks ein Unterdruck zugeführt wird, wobei der Überdruck beziehungsweise der Unterdruck oder ihr Zusammenwirken das Fördern des Wassers aus dem Wassersammeltank in Richtung des Wasserprimärtanks bewirkt.

Die beschriebene Ausgestaltung des Kraftfahrzeugs hat den Vorteil, dass eine dezentrale Speicherung des Wasser erfolgt, nämlich in dem Wassersammeltank, dem Wasserprimärtank und dem wenigstens einen Wassersekundärtank. Die Volumina der einzelnen Tanks kann daher im Vergleich zu dem Volumen des bisher verwendeten Vorratsbehälters klein gewählt werden. Zudem ist es nicht notwendig, einen hohen Fördermassenstrom zwischen den Tanks zu realisieren, weil in dem Wasserprimärtank eine hinreichende Menge an Wasser für einen bestimmungsgemäßen Betrieb des wenigstens einen Wasserverbrauchers vorgehalten wird.

Eine Weiterbildung der Erfindung sieht vor, dass der Wasserprimärtank über eine Entnahmeleitung an den wenigstens einen Wasserverbraucher strömungstechnisch angeschlossen ist, die einen größeren Leitungsquerschnitt aufweist als eine Verbindungsleitung, über die der wenigstens eine Wassersekundärtank an den Wassersammeltank strömungstechnisch angeschlossen ist und/oder als eine Zuführleitung, über die der Wasserprimärtank an de wenigstens einen Wassersekundärtank strömungstechnisch angeschlossen ist.

Die Entnahmeleitung verbindet den Wasserprimärtank mit dem wenigstens einen Wasserverbraucher. Beispielsweise mündet die Entnahmeleitung unmittelbar in den Wasserprimärtank ein. Es kann jedoch auch vorgesehen sein, dass die Entnahmeleitung den Wasserprimärtank lediglich mittelbar mit dem Wasserverbraucher strömungstechnisch verbindet, beispielsweise über einen Wasserarbeitstank. In diesem Fall ist die Entnahmeleitung bevorzugt unmittelbar an den Wasserarbeitstank strömungstechnisch angeschlossen, wohingegen eine strömungstechnische Verbindung zwischen dem Wasserprimärtank und dem Wasserarbeitstank über eine Versorgungsleitung hergestellt ist.

Es kann beispielsweise vorgesehen sein, dass die Versorgungsleitung den gleichen Leitungsquerschnitt aufweist wie die Entnahmeleitung. Ihr Leitungsquerschnitt kann jedoch auch kleiner sein als derjenige der Entnahmeleitung. Die Entnahmeleitung beziehungsweise ihr Leitungsquerschnitt ist derart bemessen, dass dem Wasserverbraucher das Wasser mit dem Entnahmemassenstrom zuführbar ist.

Strömungstechnisch zwischen dem Wassersammeltank und dem Wassersekundärtank ist die Verbindungsleitung angeordnet. Beispielsweise mündet die Verbindungsleitung einerseits unmittelbar an den Wassersekundärtank und andererseits unmittelbar an den Wassersammeltank ein. Über die Verbindungsleitung kann insoweit Wasser aus dem Wassersammeltank dem Wassersekundärtank zugeführt werden. Es kann vorgesehen sein, dass der Wassersammeltank geodätisch über dem Wassersekundärtank angeordnet ist, sodass das Wasser aus dem Sammeltank aufgrund von Schwerkrafteinfluss durch die Verbindungsleitung in Richtung des Wassersekundärtanks gedrängt wird.

Zusätzlich zu der Verbindungsleitung liegt die Zuführleitung vor, nämlich strömungstechnisch zwischen den Wassersekundärtanks und dem Wasserprimärtank. Beispielsweise mündet die Zuführleitung einerseits in den Wassersekundärtank und andererseits in den Wasserprimärtank ein, sodass eine unmittelbare Strömungsverbindung zwischen dem Wassersekundärtank und dem Wasserprimärtank hergestellt ist. Erfindungsgemäß liegen mehrere Wassersekundärtanks vor, diese sind über die Zuführleitung strömungstechnisch in Reihe geschaltet, wobei genau einer der Wassersekundärtanks über die Zuführleitung strömungstechnisch unmittelbar an den Wasserprimärtank angeschlossen ist. Die weiteren Wassersekundärtanks sind lediglich mittelbar, nämlich über diesen Wassersekundärtank, strömungstechnisch mit dem Wasserprimärtank verbunden.

Besonders bevorzugt weisen sowohl die Verbindungsleitung als auch die Zuführleitung jeweils einen kleineren Leitungsquerschnitt auf als die Entnahmeleitung. Beispielsweise beträgt der Durchmesser des Leitungsquerschnitts jeweils höchstens 10 mm oder höchstens 7,5 mm, bevorzugt jedoch höchstens 5 mm oder höchstens 2,5 mm. Beispielsweise entspricht der Leitungsquerschnitt der Verbindungsleitung dem Leitungsquerschnitt der Zuführleitung. Es kann jedoch in jedem Fall vorgesehen sein, dass der Leitungsquerschnitt der Zuführleitung größer ist als der Leitungsquerschnitt der Verbindungsleitung.

Vorzugsweise ist jedoch der Leitungsquerschnitt der Verbindungsleitung größer als der Leitungsquerschnitt der Zuführleitung. Insoweit kann das Wasser dem Wassersekundärtank aus dem Wassersammeltank schneller zugeführt werden als das Wasser dem Wasserprimärtank aus dem Wassersekundärtank zuführbar ist. Hierdurch wird ein schnelles Befüllen der Wasserbereitstellungseinrichtung mit Wasser, insbesondere aus einer externen Wasserquelle, über den Wassersammeltank sichergestellt.

Besonders bevorzugt ist hierbei das Volumen desjenigen Wassersekundärtanks, welcher über die Verbindungsleitung unmittelbar an den Wassersammeltank strömungstechnisch angeschlossen ist, vergleichsweise groß. Beispielsweise ist das Volumen dieses Wassersekundärtanks um einen Faktor von mindestens 2, mindestens 3, mindestens 4 oder mindestens 5 größer als das Volumen des Wassersammeltanks. Eine derartige Ausgestaltung des Kraftfahrzeugs ermöglicht eine hervorragende Verfügbarkeit des Wassers und gleichzeitig eine schnelle Befüllung mit dem Wasser.

Eine Weiterbildung der Erfindung sieht vor, dass der Wasserprimärtank über einen Wasserarbeitstank strömungstechnisch an den wenigstens einen Wasserverbraucher angeschlossen ist. Zusätzlich zu dem Wassersammeltank, dem Wasserprimärtank und dem wenigstens einen Wassersekundärtank liegt insoweit ein weiterer Wassertank, nämlich der Wasserarbeitstank, vor. Dieser ist strömungstechnisch zwischen dem Wasserprimärtank und dem Wasserverbraucher angeordnet. Das dem Wasserverbraucher zuzuführende Wasser wird also nicht unmittelbar dem Wasserprimärtank entnommen, sondern vielmehr dem Wasserarbeitstank. In anderen Worten wird das dem Wasserverbraucher zugeführte Wasser in dem Wasserarbeitstank vorgehalten und aus diesem dem Wasserverbraucher zugeführt.

Der Wasserarbeitstank ist strömungstechnisch näher an dem Wasserverbraucher angeordnet als der Wasserprimärtank. Beispielsweise ist es hierbei vorgesehen, dass der Wasserarbeitstank unmittelbar an dem Wasserverbraucher vorliegt oder sogar Bestandteil von diesem ist. Beispielsweise weist der Wasserarbeitstank ein Volumen auf, welches bezogen auf das Volumen des Wasserprimärtanks höchstens 0,75, höchstens 0,5 oder höchstens 0,25 beträgt. In diesem Fall wird eine platzsparende Ausgestaltung des Wasserarbeitstanks nah an dem Wasserverbraucher realisiert, wobei die Verfügbarkeit des Wassers für den Wasserverbraucher im Wesentlichen mithilfe des Wasserprimärtanks sichergestellt ist. Selbstverständlich kann es jedoch auch vorgesehen sein, dass der Wasserarbeitstank ein Volumen aufweist, welches dem Volumen des Wasserprimärtanks entspricht oder sogar größer ist als dieses. Grundsätzlich wird mittels des Wasserarbeitstanks die rasche Verfügbarkeit des Wassers für den Wasserverbraucher sichergestellt.

Eine Weiterbildung der Erfindung sieht vor, dass die Entnahmeleitung in den Wasserarbeitstank einmündet und der Wasserarbeitstank an den Wasserprimärtank über eine Versorgungsleitung strömungstechnisch angeschlossen ist, die einen kleineren Leitungsquerschnitt aufweist als die Entnahmeleitung. Die Entnahmeleitung ist insoweit unmittelbar an den Wasserarbeitstank angeschlossen und damit lediglich mittelbar über den Wasserarbeitstank an den Wasserprimärtank. Strömungstechnisch zwischen dem Wasserarbeitstank und dem Wasserprimärtank liegt die Versorgungsleitung vor, über welche zumindest zeitweise Wasser aus dem Wasserprimärtank in den Wasserarbeitstank gefördert wird.

Weil der Entnahmemassenstrom zur Bereitstellung des Wassers für den Wasserverbraucher mithilfe des Wasserarbeitstanks sichergestellt ist, kann die Versorgungsleitung im Vergleich mit der Entnahmeleitung den kleineren Leitungsquerschnitt aufweisen. Alternativ kann es selbstverständlich auch vorgesehen sein, dass der Leitungsquerschnitt der Versorgungsleitung dem Leitungsquerschnitt der Entnahmeleitung entspricht, um über einen längeren Zeitraum den hohen Entnahmemassenstrom sicherzustellen. Die Verwendung der Versorgungsleitung und des Wasserarbeitstanks ermöglicht in jedem Fall eine besonders flexible Anordnung und eine kompakte Ausgestaltung der Wasserbereitstellungseinrichtung.

Eine Weiterbildung der Erfindung sieht vor, dass der Wasserprimärtank und/oder der Wasserarbeitstank jeweils eine Heizeinrichtung aufweisen, und/oder dass der Wassersammeltank und/oder der wenigstens eine Wassersekundärtank jeweils heizungsfrei ausgestaltet sind. Die Heizeinrichtung dient dem Beheizen des jeweiligen Tanks beziehungsweise des in dem jeweiligen Tank vorliegenden Wassers. Die Heizeinrichtung ist bevorzugt eine elektrische Heizeinrichtung. Mithilfe der Heizeinrichtung kann in dem jeweiligen Tank vorliegendes gefrorenes Wasser aufgetaut und somit für den Wasserverbraucher bereitgestellt werden.

Weil bereits mithilfe des Wasserprimärtanks und/oder des Wasserarbeitstanks ein bestimmungsgemäßer Betrieb des Wasserverbrauchers über einen bestimmten Zeitraum sichergestellt werden kann, ist es ausreichend, wenn lediglich einer dieser Tanks oder beide Tanks jeweils über eine solche Heizeinrichtung verfügen. Die anderen Tanks können hingegen heizungsfrei, also nicht beheizbar, sein. Die beschriebene Ausgestaltung stellt einen energieeffizienten Betrieb des Kraftfahrzeugs sicher.

Zusätzlich oder alternativ kann es vorgesehen sein, wenigstens einem der beschriebenen Tanks, beispielsweise dem Wasserprimärtank und/oder dem Wasserarbeitstank, ein Zusatzmittel zuzuführen. Das Zusatzmittel vermengt sich in dem jeweiligen Tank mit dem darin befindlichen Wasser, sodass das Wasser nachfolgend das Zusatzmittel aufweist. Das Zusatzmittel kann beispielsweise ein Frostschutzmittel oder ein Reinigungsmittel sein. Das Reinigungsmittel kommt insbesondere dann zum Einsatz, falls das Wasser zum Betreiben der Reinigungsanlage, insbesondere der Scheibenwaschanlage, des Kraftfahrzeugs dient. Das Zusatzmittel kann zudem dazu dienen, wenigstens eine Eigenschaft des Wassers zu verändern, beispielsweise die Härte. In diesem Fall ist das Zusatzmittel ein Enthärtungsmittel beziehungsweise Entkalkungsmittel.

Eine Weiterbildung der Erfindung sieht vor, dass in der Verbindungsleitung wenigstens eine der folgenden Einrichtungen vorliegt: Filter, Ionentauscher, Gütesensor und Spülpumpe, insbesondere mit parallel geschaltetem Rückschlagventil. Die wenigstens eine der genannten Einrichtungen liegt insoweit strömungstechnisch zwischen dem Wassersammeltank und dem Wassersekundärtanks vor. Der Filter ist dazu vorgesehen und ausgebildet, Partikel beziehungsweise Schmutzpartikel aus dem von dem Wassersammeltank kommenden Wasser herauszufiltern. Auch der Ionentauscher ist für ein Reinigen des Wassers vorgesehen und ausgebildet. Der Gütesensor dient hingegen dem Feststellen eines Verschmutzungsgrads und/oder einer Zusammensetzung des Wassers. Der Gütesensor kann insoweit auch als Qualitätssensor bezeichnet werden. Der Verschmutzungsgrad entspricht beispielsweise einer Anzahl von Partikeln in dem Wasser pro Volumeneinheit. Der Gütesensor ist beispielsweise ein optischer oder ein chemischer Sensor beziehungsweise weist einen solchen auf.

Zusätzlich oder alternativ kann in der Verbindungsleitung die Spülpumpe vorliegen. Die Spülpumpe dient dem Fördern des Wassers aus dem Wassersammeltank in Richtung des Wasserprimärtanks und/oder des Wassersekundärtanks, nämlich insbesondere mit einem höheren Massenstrom als die Wasserfördereinrichtung. Die Spülpumpe ist beispielsweise für ein Spülen der Wasserbereitstellungseinrichtung im Rahmen einer Wartung des Kraftfahrzeugs oder dergleichen vorgesehen. Der Spülpumpe kann ein Rückschlagventil parallel geschaltet sein, sodass auch bei deaktivierter Spülpumpe Wasser über die Verbindungsleitung aus dem Wassersammeltank in Richtung des Wasserprimärtanks und/oder des Wassersekundärtanks strömen kann.

Beispielsweise liegen alle der genannten Einrichtungen in der Verbindungsleitung vor. In jedem Fall ist hierbei in Strömungsrichtung ausgehend von dem Wassersammeltank hin zu dem Wassersekundärtank folgende Reihenfolge vorgesehen: Spülpumpe, Filter, Ionentauscher und Gütesensor. Beispielsweise wird bei einer mit dem Gütesensor sensierten hinreichenden Qualität des Wassers dieses dem Wasserprimärtank und/oder dem Wassersekundärtank zugeführt. Ist die Wasserqualität hingegen nicht hinreichend, so wird das Wasser aus der Wasserbereitstellungseinrichtung abgeführt. Unter der Wasserqualität ist hierbei beispielsweise der Verschmutzungsgrad und/oder Zusammensetzung zu verstehen. Insgesamt ist somit ein besonders flexibler Betrieb des Kraftfahrzeugs realisiert.

Eine Weiterbildung der Erfindung sieht vor, dass der unmittelbare Anschluss des Wassersammeltanks an den Wasserprimärtank über eine Umgehungsleitung vorliegt, die einerseits in den Wasserprimärtank und andererseits in den Wassersammeltank oder die Verbindungsleitung einmündet. Die Umgehungsleitung dient insoweit dem Umgehen des wenigstens einen Wassersekundärtanks. Beispielsweise mündet die Umgehungsleitung auf ihrer dem Wasserprimärtank abgewandten Seite in den Wassersammeltank ein. Vorzugsweise mündet sie jedoch in die Verbindungsleitung ein, nämlich bevorzugt stromabwärts zumindest der Spülpumpe. Besonders bevorzugt mündet sie stromabwärts des Filters und/oder des Ionentauschers und/oder des Gütesensors und/oder Spülpumpe in die Verbindungsleitung ein.

In der Umgehungsleitung ist besonders bevorzugt ein Schaltventil angeordnet, wobei in einer ersten Schaltstellung des Schaltventils das Schaltventil die Umgehungsleitung freigibt und in einer zweiten Schaltstellung strömungstechnisch unterbricht. Bevorzugt liegt also in der ersten Schaltstellung des Schaltventils die Strömungsverbindung zwischen dem Wasserprimärtank einerseits und dem Wassersammeltank beziehungsweise der Verbindungsleitung andererseits über die Umgehungsleitung vor.

Es kann vorgesehen sein, dass die Umgehungsleitung einen Leitungsquerschnitt aufweist, welcher dem Leitungsquerschnitt der Zuführleitung entspricht. Die Umgehungsleitung kann jedoch auch im Vergleich mit der Zuführleitung einen größeren Leitungsquerschnitt aufweisen. Die Umgehungsleitung und die Zuführleitung können grundsätzlich separat voneinander in den Wasserprimärtank einmünden. Es kann jedoch auch vorgesehen sein, dass die Zuführleitung stromaufwärts des Wasserprimärtanks in die Umgehungsleitung einmündet und insoweit gemeinsam mit dieser zu dem Wasserprimärtank verläuft. In jedem Fall wird mit der beschriebenen Ausgestaltung eine hohe Flexibilität bei gleichzeitig geringem Platzbedarf erzielt.

Die Erfindung sieht vor, dass an den Wasserprimärtank eine Unterdruckpumpe zur Förderung des gasförmigen Fördermediums aus dem Wasserprimärtank strömungstechnisch angeschlossen ist, insbesondere über den Wasserarbeitstank, und/oder dass an den Wassersammeltank eine Überdruckbereitstellungseinrichtung zur Förderung des gasförmigen Fördermediums in Richtung des Wasserprimärtanks strömungstechnisch angeschlossen ist. Die Unterdruckpumpe dient der Bereitstellung eines Unterdrucks, die Überdruckbereitstellungseinrichtung der Bereitstellung eines Überdrucks. Kommt die Unterdruckpumpe zur Förderung des Fördermediums zum Einsatz, so ist diese derart an die Tanks angeschlossen, dass das Wasser ausgehend von dem Wassersammeltank in Richtung des Wasserprimärtanks beziehungsweise des Wasserarbeitstanks gesaugt wird. Im Falle der Überdruckbereitstellungseinrichtung ist diese derart an die Tanks angeschlossen, dass das Wasser ausgehend von dem Wassersammeltank in Richtung des Wasserprimärtanks beziehungsweise des Wasserarbeitstanks gedrückt wird.

Die Unterdruckpumpe ist insoweit an den Wasserprimärtank oder - sofern vorhanden - an den Wasserarbeitstank unmittelbar angeschlossen und an die weiteren Tanks lediglich über diesen. Die Überdruckbereitstellungseinrichtung ist zumindest an den Wassersammeltank strömungstechnisch angeschlossen und beispielsweise lediglich mittelbar an die weiteren Tanks. Es kann jedoch auch vorgesehen sein, dass die Überdruckbereitstellungseinrichtung an mehrere der Tanks, insbesondere an den Wassersammeltank, den Wasserprimärtank und/oder den wenigstens einen Wassersekundärtank jeweils unmittelbar angeschlossen ist. In diesem Fall sind die Tanks einzeln mit dem von der Überdruckbereitstellungseinrichtung bereitgestellten Überdruck gezielt beaufschlagbar. Insgesamt wird auf diese Art und Weise ein effektives Fördern des Wassers realisiert.

Eine Weiterbildung der Erfindung sieht vor, dass der Wasserverbraucher eine Wassereinspritzung eines Antriebsaggregats des Kraftfahrzeugs oder eine Scheibenreinigungseinrichtung des Kraftfahrzeugs ist. Auf eine derartige Ausgestaltung des Wasserverbrauchers wurde vorstehend bereits hingewiesen. Es kann vorgesehen sein, dass die Wasserbereitstellungseinrichtung sowohl dem Bereitstellen von Wasser für die Wassereinspritzung als auch für die Scheibenreinigungseinrichtung herangezogen wird. In diesem Fall ist sie besonders flexibel einsetzbar.

Die Erfindung betrifft weiterhin ein Verfahren zum Betreiben eines Kraftfahrzeugs, insbesondere eines Kraftfahrzeugs gemäß den Ausführungen im Rahmen dieser Beschreibung, wobei das Kraftfahrzeug über eine Wasserbereitstellungseinrichtung zur Bereitstellung von Wasser für wenigstens einen Wasserverbraucher verfügt mit einem Wassersammeltank, einem Wasserprimärtank, mehreren über eine Verbindungsleitung an den Wassersammeltank strömungstechnisch angeschlossenen Wassersekundärtanks und einer Umgehungsleitung, die einerseits in den Wasserprimärtank und andererseits in die Verbindungsleitung einmündet und in der ein Schaltventil angeordnet ist, wobei der Wassersammeltank an eine Wasserquelle strömungstechnisch angeschlossen oder anschließbar ist und der Wasserprimärtank unter Umgehung des Wassersammeltanks und der Wassersekundärtanks an den wenigstens einen Wasserverbraucher strömungstechnisch angeschlossen ist, wobei die Wasserbereitstellungseinrichtung eines Wasserfördereinrichtung aufweist, die zur Förderung des Wassers aus dem Wassersammeltank in Richtung des Wasserprimärtanks mittels eines gasförmigen Fördermediums vorgesehen und ausgebildet ist, wobei an den Wasserprimärtank eine Unterdruckpumpe zur Förderung des gasförmigen Fördermediums aus dem Wasserprimärtank strömungstechnisch angeschlossen ist und/oder an den Wassersammeltank eine Überdruckbereitstellungseinrichtung zur Förderung des gasförmigen Fördermediums in Richtung des Wasserprimärtanks strömungstechnisch angeschlossen ist.

Dabei ist vorgesehen , dass der Wassersammeltank sowohl unmittelbar über die Umgehungsleitung als auch mittelbar über die Wassersekundärtanks strömungstechnisch an den Wasserprimärtank angeschlossen ist, wobei die Wassersekundärtanks über die Zuführleitung strömungstechnisch in Reihe geschaltet sind und der Wasserprimärtank über die Zuführleitung an genau einen der Wassersekundärtanks strömungstechnisch unmittelbar angeschlossen ist.

Auf die Vorteile einer derartigen Ausgestaltung des Kraftfahrzeugs beziehungsweise einer derartigen Vorgehensweise wurde bereits hingewiesen. Sowohl das Kraftfahrzeug als auch das Verfahren zu seinem Betreiben können gemäß den Ausführungen im Rahmen dieser Beschreibung weitergebildet sein, sodass insoweit auf diese verwiesen wird.

Eine Weiterbildung der Erfindung sieht vor, dass bei einem Abstellen des Kraftfahrzeugs, welches insbesondere ein Deaktivieren der Antriebseinrichtung beinhaltet, eine Wetterprognose abgefragt oder erstellt wird. In Abhängigkeit von der Wetterprognose erfolgt ein Austragen von Wasser aus wenigstens einer der Leitungen der Wasserbereitstellungseinrichtung. Wird beispielsweise im Rahmen der Wetterprognose festgestellt, dass Frostgefahr vorliegt, so wird das Wasser aus der wenigstens einen Leitung, insbesondere allen Leitungen, ausgetragen. Ist Frostgefahr hingegen nicht gegeben, so kann dies unterbleiben. Selbstverständlich kann das Austragen des Wassers aus der wenigstens einen Leitung oder allen Leitungen aus Sicherheitsgründen auch bei jedem Abstellen des Kraftfahrzeugs durchgeführt werden.

Eine Weiterbildung der Erfindung sieht vor, dass bei einem Anschließen einer externen Wasserquelle an den Wassersammeltank ein Befüllbetrieb der Wasserbereitstellungseinrichtung erfolgt. Während diesem wird die Wasserbereitstellungseinrichtung derart betrieben, dass alle verfügbaren Tanks mit dem von der externen Wasserquelle bereitgestellten Wasser gefüllt werden, insbesondere vollständig. Beispielsweise erfolgt dies derart, dass zunächst der Wasserprimärtank und - sofern vorhanden - der Wasserarbeitstank gefüllt werden. Erst anschließend erfolgt das Füllen des wenigstens einen Wassersekundärtanks. Hierdurch werden eine schnelle Inbetriebnahme des Kraftfahrzeugs und eine rasche Verfügbarkeit des Wassers für den Wasserverbraucher realisiert.

Zusätzlich oder alternativ wird bei dem Anschließen der externen Wasserquelle an den Wassersammeltank ein Spülbetrieb beziehungsweise Reinigungsbetrieb der Wasserbereitstellungseinrichtung durchgeführt. Bei diesem werden alle Tanks der Wasserbereitstellungseinrichtung mit dem extern bereitgestellten Wasser durchspült und das Wasser anschließend wieder entnommen. Beispielsweise durchströmt das Wasser alle Tanks ausgehend von dem Wassersammeltank bis hin zu dem Wasserprimärtank oder dem Wasserarbeitstank und wird aus diesem abgeführt. Bei dem Durchströmen des Tanks nimmt das Wasser Verschmutzungen mit, beispielsweise Schmutzpartikel und/oder Mikroorganismen, sodass diese aus der Wasserbereitstellungseinrichtung ausgetragen werden. Das extern bereitgestellte Wasser kann - im Falle des Reinigungsbetriebs - mit einem Reinigungsmittel versetzt sein. In dem Spülbetrieb wird hingegen Wasser ohne Reinigungsmittel zum Durchspülen der Wasserbereitstellungseinrichtung verwendet. Bevorzugt ist es vorgesehen, erst den Reinigungsbetrieb und anschließend den Spülbetrieb durchzuführen. Nachfolgend wird besonders bevorzugt der Befüllbetrieb durchgeführt, um die Wasserbereitstellungseinrichtung mit Wasser zu befüllen.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung eines Teils eines Kraftfahrzeugs, welches über eine Wasserbereitstellungseinrichtung in einer ersten Ausführungsform verfügt, sowie
- Figur 2: eine schematische Darstellung des Kraftfahrzeugs, wobei die Wasserbereitstellungseinrichtung in einer zweiten Ausführungsform vorliegt.

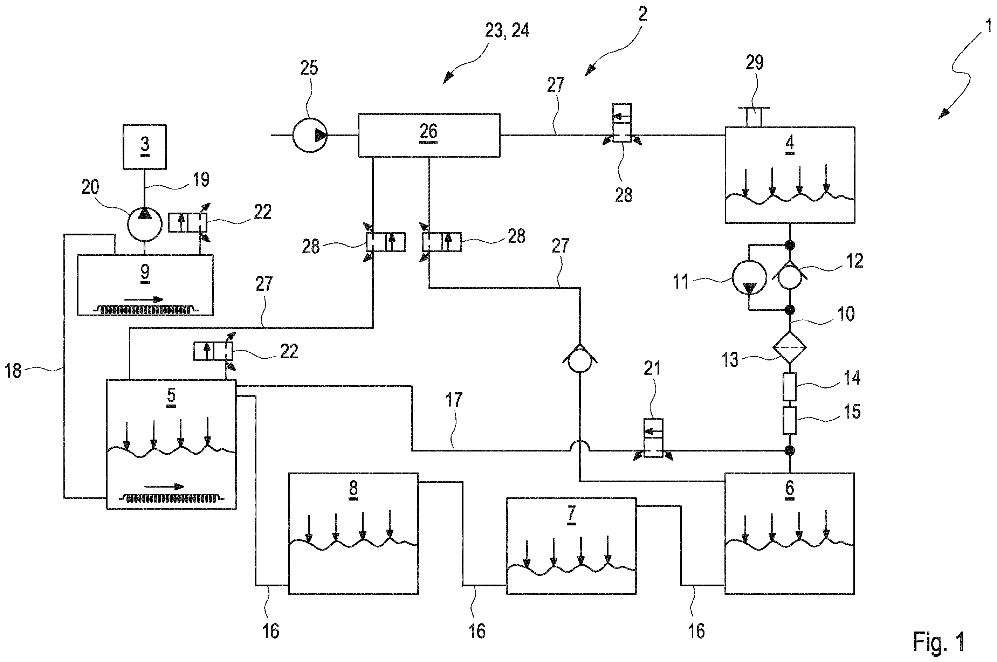

Die Figur 1 zeigt eine schematische Darstellung eines Bereichs eines Kraftfahrzeugs 1, nämlich eine Wasserbereitstellungseinrichtung 2 sowie einen Wasserverbraucher 3 des Kraftfahrzeugs. Der Wasserverbraucher 3 liegt beispielsweise als Reinigungseinrichtung oder als Wassereinspritzung einer Antriebseinrichtung des Kraftfahrzeugs 1 vor. Die Wasserbereitstellungseinrichtung 2 dient dem Bereitstellen von Wasser für den Wasserverbraucher 3. Hierzu weist die Wasserbereitstellungseinrichtung 2 einen Wassersammeltank 4, einen Wasserprimärtank 5 sowie wenigstens einen Wassersekundärtank 6, in dem hier dargestellten Ausführungsbeispiel Wassersekundärtanks 6, 7 und 8, auf. Zusätzlich weist das gezeigte Ausführungsbeispiel der Wasserbereitstellungseinrichtung 2 einen Wasserarbeitstank 9 auf.

Der Wassersammeltank 4 ist mit dem Wassersekundärtank 6 über eine Verbindungsleitung 10 strömungstechnisch verbunden. In der Verbindungsleitung 10 sind in dem gezeigten Beispiel eine Spülpumpe 11 mit einem parallel geschalteten Rückschlagventil 12, ein Filter 13, ein Ionentauscher 14 sowie ein Gütesensor 15 angeordnet. Die Wassersekundärtanks 6, 7 und 8 sind miteinander und mit dem Wasserprimärtank 5 jeweils über eine Zuführleitung 16 strömungstechnisch verbunden. Beispielsweise mündet die am weitesten stromabwärts liegende Zuführleitung 16, welche von dem Wassersekundärtank 8 ausgeht, in eine Umgehungsleitung 17 ein. Die Umgehungsleitung 17 zweigt von der Verbindungsleitung 10 ab und mündet auf ihrer der Verbindungsleitung 10 abgewandten Seite in den Wasserprimärtank 5 ein. Eine strömungstechnische Anbindung des Wasserarbeitstanks 9 an den Wasser primärtank 5 ist über eine Versorgungsleitung 18 hergestellt.

Weiterhin ist der Wasserarbeitstank 9 strömungstechnisch über eine Entnahmeleitung 19 strömungstechnisch an dem Wasserverbraucher 3 angeschlossen. In der Entnahmeleitung 19 ist eine Förderpumpe 20 angeordnet, die zum Entnehmen von Wasser aus dem Wasserarbeitstank 9 und dem Zuführen des entnommenen Wassers zu dem Wasserverbraucher 3 vorgesehen und ausgebildet ist. Es kann vorgesehen sein, dass die Entnahmeleitung 19 und die Versorgungsleitung 18 denselben Leitungsquerschnitt aufweisen. Es kann zudem vorgesehen sein, dass die Verbindungsleitung 10 ebenfalls denselben Leitungsquerschnitt aufweist wie die Entnahmeleitung 19 und die Versorgungsleitung 18. Die Zuführleitungen 16 sind hingegen mit einem kleineren Leitungsquerschnitt ausgestaltet, bevorzugt ebenso die Umgehungsleitung 17. Es kann jedoch vorgesehen sein, dass die Umgehungsleitung 17 zwischen einer Einmündungsstelle der Zuführleitung 16 in die Umgehungsleitung 17 und dem Wasserprimärtank 5 einen größeren Durchströmungsquerschnitt aufweist, insbesondere denselben Durchströmungsquerschnitt wie die Verbindungsleitung 10.

Mit einer derartigen Ausgestaltung ist es insbesondere möglich, Wasser durch die Verbindungsleitung 10 sowohl der Umgehungsleitung 17 als auch den Zuführleitungen 16 zuzuführen, sodass über die Umgehungsleitung 17 und die Zuführleitungen 16 parallel Wasser aus dem Wassersammeltank 4 in den Wasserprimärtank 5 gefördert wird beziehungsweise werden kann. In die Umgehungsleitung 17 ist ein Schaltventil 21 angeordnet, mittels welchem die Umgehungsleitung 17 wahlweise freigegeben oder unterbrochen ist. Weiterhin sind an den Wasserprimärtank 5 und den Wasserarbeitstank 9 Entlüftungsventile 22 strömungstechnisch angeschlossen, mittels welchen der jeweilige Tank entlüftbar ist. Auch die weiteren Tanks können optional jeweils ein solches Entlüftungsventil 22 aufweisen. Die Entlüftungsventile 22 liegen bevorzugt als elektrische beziehungsweise elektromagnetische Schaltventile vor.

Die Wasserbereitstellungseinrichtung 2 verfügt weiterhin über eine Wasserfördereinrichtung 23, die hier über eine Überdruckbereitstellungseinrichtung 24 mit einer Überdruckpumpe 25 und einem Drucktank 26 verfügt. Der Drucktank 26 ist strömungstechnisch über Überdruckleitungen 27 jeweils an den Wassersammeltank 4, den Wassersekundärtank 6 und den Wasserprimärtank 5 strömungstechnisch angeschlossen, nämlich jeweils unmittelbar. In jeder der Überdruckleitungen 27 liegt ein Überdruckschaltventil 28 vor. Mithilfe der Wasserfördereinrichtung 23 kann das in der Wasserbereitstellungseinrichtung 2 vorliegende Wasser mittels eines gasförmigen Fördermediums aus dem Wassersammeltank 4 in Richtung der weiteren Tanks gefördert werden. Es kann vorgesehen sein, dass der Wassersammeltank 4 über einen Anschlussstutzen 29 verfügt, welcher zum Anschluss einer externen Wasserquelle an den Wassersammeltank 4 vorgesehen und ausgebildet ist. Der Anschlussstutzen 29 weist beispielsweise einen Anschluss für eine herkömmliche Haushaltsschlauchkupplung auf.

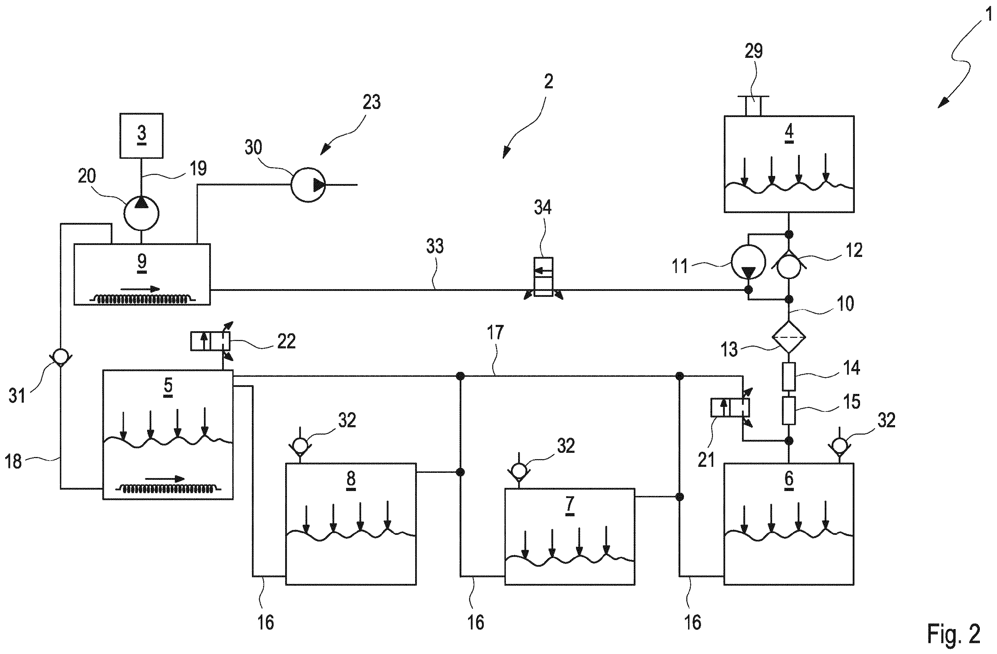

Die Figur 2 zeigt eine schematische Darstellung des Kraftfahrzeugs 1, wobei die Wasserbereitstellungseinrichtung 2 in einer zweiten Ausführungsform vorliegt. Diese entspricht zumindest teilweise der ersten Ausführungsform, sodass auf die vorstehenden Ausführungen hingewiesen und nachfolgend lediglich auf die Unterschiede eingegangen wird. Diese liegen darin, dass die Wasserfördereinrichtung 23 anstelle der Überdruckbereitstellungseinrichtung 24 eine Unterdruckpumpe 30 aufweist, welche unmittelbar an dem Wasserarbeitstank 9 strömungstechnisch angeschlossen ist. Mittels der Unterdruckpumpe 30 kann das gasförmige Fördermedium aus dem Arbeitstank 9 herausgesaugt werden, sodass sich eine Förderwirkung auf das in der Wasserbereitstellungseinrichtung 2 vorliegende Fluid ergibt. Die Förderwirkung der Unterdruckpumpe 30 wird mittels eines Rückschlagventils 31 unterstützt, welches in der Versorgungsleitung 18 vorliegt und in Richtung des Wasserarbeitstanks 9 öffnet.

Ein weiterer Unterschied liegt darin, dass den Wassersekundärtanks 6, 7 und 8 jeweils ein Überdruckventil 32 zugeordnet ist, welches im Wesentlichen als Rückschlagventil vorliegt und in Richtung einer Außenumgebung der Wasserbereitstellungseinrichtung 2 öffnet. Über die Überdruckventile 32 kann Überdruck aus den Wassersekundärtanks 6, 7 und 8 abgebaut werden. Es ist zudem vorgesehen, dass die Zuführleitungen 16 nicht lediglich die Wassersekundärtanks 6, 7 und 8 untereinander und mit dem Wasserprimärtank 5 verbinden, sondern dass sie zusätzlich jeweils in die Umgehungsleitung 17 einmünden. Hierdurch ist eine gezielte Beaufschlagung jedes der Wassersekundärtanks 6, 7 und 8 mit Wasser möglich.

Zusätzlich zu den bereits genannten Leitungen verfügt die Wasserbereitstellungseinrichtung 2 in der zweiten Ausführungsform über eine Befüllungsleitung 33, in welcher vorzugsweise ein Schaltventil 34 vorliegt. Die Befüllungsleitung 33 verbindet den wasserarbeitstank 9 mit der Verbindungsleitung 10, nämlich stromabwärts der Spülpumpe 11. Über die Befüllungsleitung 33 kann mithilfe der Spülpumpe 11 ein rasches unmittelbares Befüllen des Wasserarbeitstanks 9 aus dem Wassersammeltank 4 durchgeführt werden.

Die beschriebene Ausgestaltung des Kraftfahrzeugs 1 beziehungsweise der Wasserbereitstellungseinrichtung 2 in den beiden unterschiedlichen Ausführungsformen ermöglicht ein zuverlässiges Bereitstellen von Wasser für den Wasserverbraucher 3 bei gleichzeitig äußerst geringem Platzbedarf.

### BEZUGSZEICHENLISTE:

- 1: Kraftfahrzeug
- 2: Wasserbereitstellungseinrichtung
- 3: Wasserverbraucher
- 4: Wassersammeltank
- 5: Wasserprimärtank
- 6: Wassersekundärtank
- 7: Wassersekundärtank
- 8: Wassersekundärtank
- 9: Wasserarbeitstank
- 10: Verbindungsleitung
- 11: Spülpumpe
- 12: Rückschlagventil
- 13: Filter
- 14: Ionentauscher
- 15: Gütesensor
- 16: Zuführleitung
- 17: Umgehungsleitung
- 18: Versorgungsleitung
- 19: Entnahmeleitung
- 20: Förderpumpe
- 21: Schaltventil
- 22: Entlüftungsventil
- 23: Wasserfördereinrichtung
- 24: Überdruckbereitstellungseinrichtung
- 25: Überdruckpumpe
- 26: Drucktank
- 27: Überdruckleitung
- 28: Überdruckschaltventil
- 29: Anschlussstutzen
- 30: Unterdruckpumpe
- 31: Rückschlagventil
- 32: Überdruckventil
- 33: Befüllungsleitung
- 34: Schaltventil

## Patentansprüche

1. Kraftfahrzeug (1) mit einer Wasserbereitstellungseinrichtung (2) zur Bereitstellung von Wasser für wenigstens einen Wasserverbraucher (3), mit einem Wassersammeltank (4), einem Wasserprimärtank (5), mehreren über eine Verbindungsleitung (10) an den Wassersammeltank (4) strömungstechnisch angeschlossene Wassersekundärtanks (6,7,8) und einer Umgehungsleitung (17), die einerseits in den Wasserprimärtank (5) und andererseits in die Verbindungsleitung (10) einmündet und in der ein Schaltventil (21) angeordnet ist, wobei der Wassersammeltank (4) an eine Wasserquelle strömungstechnisch angeschlossen oder anschließbar ist und der Wasserprimärtank (5) unter Umgehung des Wassersammeltanks (4) und der Wassersekundärtanks (6,7,8) an den wenigstens einen Wasserverbraucher (3) strömungstechnisch angeschlossen ist, wobei die Wasserbereitstellungseinrichtung (2) eine Wasserfördereinrichtung (23) aufweist, die zur Förderung des Wassers aus dem Wassersammeltank (4) in Richtung des Wasserprimärtanks (5) mittels eines gasförmigen Fördermediums vorgesehen und ausgebildet ist, wobei an den Wasserprimärtank (5) eine Unterdruckpumpe (30) zur Förderung des gasförmigen Fördermediums aus dem Wasserprimärtank (5) strömungstechnisch angeschlossen ist und/oder an den Wassersammeltank (4) eine Überdruckbereitstellungseinrichtung (24) zur Förderung des gasförmigen Fördermediums in Richtung des Wasserprimärtanks (5) strömungstechnisch angeschlossen ist, **dadurch gekennzeichnet, dass** der Wassersammeltank (4) sowohl unmittelbar über die Umgehungsleitung (17) als auch mittelbar über die Wassersekundärtanks (6,7,8) und eine Zuführleitung (16) strömungstechnisch an den Wasserprimärtank (5) angeschlossen ist, wobei die Wassersekundärtanks über die Zuführleitung (16) strömungstechnisch in Reihe geschaltet sind und der Wasserprimärtank (5) über die Zuführleitung (16) an genau einen der Wassersekundärtanks (6,7,8) strömungstechnisch unmittelbar angeschlossen ist.

2. Kraftfahrzeug nach Anspruch 1, **dadurch gekennzeichnet, dass** der Wasserprimärtank (5) über eine Entnahmeleitung (19) an den wenigstens einen Wasserverbraucher (3) strömungstechnisch angeschlossen ist, die einen größeren Leitungsquerschnitt aufweist als die Verbindungsleitung (10), über die der wenigstens eine Wassersekundärtank (6,7,8) an den Wassersammeltank (4) strömungstechnisch angeschlossen ist und/oder als die Zuführleitung (16), über die der Wasserprimärtank (5) an den wenigstens einen Wassersekundärtank (6,7,8) strömungstechnisch angeschlossen ist.

3. Kraftfahrzeug nach einem der vorhergehenden Ansprüche, **dadurch gekennzeichnet, dass** der Wasserprimärtank (5) über einen Wasserarbeitstank (9) strömungstechnisch an den wenigstens einen Wasserverbraucher (3) angeschlossen ist.

4. Kraftfahrzeug nach den Ansprüchen 2 und 3, **dadurch gekennzeichnet, dass** die Entnahmeleitung (19) in den Wasserarbeitstank (9) einmündet und der Wasserarbeitstank (9) an den Wasserprimärtank (5) über eine Versorgungsleitung (18) strömungstechnisch angeschlossen ist, die einen kleineren Leitungsquerschnitt aufweist als die Entnahmeleitung (19).

5. Kraftfahrzeug nach einem der Ansprüche 1 oder 3, **dadurch gekennzeichnet, dass** der Wasserprimärtank (5) und/oder der Wasserarbeitstank (9) jeweils eine Heizeinrichtung aufweisen, und/oder dass der Wassersammeltank (4) und/oder der wenigstens eine Wassersekundärtank (6,7,8) jeweils heizungsfrei ausgestaltet sind.

6. Kraftfahrzeug nach Anspruch 2, **dadurch gekennzeichnet, dass** in der Verbindungsleitung (10) wenigstens eine der folgenden Einrichtungen vorliegt: Filter (13), Ionentauscher (14), Gütesensor (15) und Spülpumpe (11).

7. Kraftfahrzeug nach einem der vorhergehenden Ansprüche, **dadurch gekennzeichnet, dass** der Wasserverbraucher (3) eine Wassereinspritzung eines Antriebsaggregats des Kraftfahrzeugs (1) oder eine Scheibenreinigungseinrichtung des Kraftfahrzeugs (1) ist.

8. Verfahren zum Betreiben eines Kraftfahrzeugs (1) gemäß einem oder mehreren der vorhergehenden Ansprüche, wobei das Kraftfahrzeug (1) über eine Wasserbereitstellungseinrichtung (2) zur Bereitstellung von Wasser für wenigstens einen Wasserverbraucher (3) verfügt, mit einem Wassersammeltank (4), einem Wasserprimärtank (5), mehreren über eine Verbindungsleitung (10) an den Wassersammeltank (4) strömungstechnisch angeschlossene Wassersekundärtanks (6,7,8) und einer Umgehungsleitung (17), die einerseits in den Wasserprimärtank (5) und andererseits in die Verbindungsleitung (10) einmündet und in der ein Schaltventil (21) angeordnet ist, wobei der Wassersammeltank (4) an eine Wasserquelle strömungstechnisch angeschlossen oder anschließbar ist und der Wasserprimärtank (5) unter Umgehung des Wassersammeltanks (4) und der Wassersekundärtanks (6,7,8) an den wenigstens einen Wasserverbraucher (3) strömungstechnisch angeschlossen ist, wobei die Wasserbereitstellungseinrichtung (2) eine Wasserfördereinrichtung (23) aufweist, die zur Förderung des Wassers aus dem Wassersammeltank (4) in Richtung des Wasserprimärtanks (5) mittels eines gasförmigen Fördermediums vorgesehen und ausgebildet ist, wobei an den Wasserprimärtank (5) eine Unterdruckpumpe (30) zur Förderung des gasförmigen Fördermediums aus dem Wasserprimärtank (5) strömungstechnisch angeschlossen ist und/oder an den Wassersammeltank (4) eine Überdruckbereitstellungseinrichtung (24) zur Förderung des gasförmigen Fördermediums in Richtung des Wasserprimärtanks (5) strömungstechnisch angeschlossen ist, **dadurch gekennzeichnet, dass** der Wassersammeltank (4) sowohl unmittelbar über die Umgehungsleitung (17) als auch mittelbar über die Wassersekundärtanks (6,7,8) und eine Zuführleitung (16) strömungstechnisch an den Wasserprimärtank (5) angeschlossen ist, wobei die Wassersekundärtanks über die Zuführleitung (16) strömungstechnisch in Reihe geschaltet sind und der Wasserprimärtank (5) über die Zuführleitung (16) an genau einen der Wassersekundärtank (6,7,8) strömungstechnisch unmittelbar angeschlossen ist.

## Claims

1. Motor vehicle (1) with a water supply unit (2) for supplying water to at least one water consumer (3), with a water collection tank (4), a primary water tank (5), a plurality of secondary water tanks (6, 7, 8) connected to the water collection tank (4) via a connecting line (10), and a bypass line (17) which opens into the primary water tank (5) on the one hand and into the connecting line (10) on the other hand, and in which a switching valve (21) is arranged, wherein the water collection tank (4) is connected or can be connected to a water source in terms of flow and the primary water tank (5) is connected to the at least one water consumer (3) in terms of flow, bypassing the water collection tank (4) and the secondary water tanks (6, 7, 8), wherein the water supply unit (2) comprises a water conveying device (23) which is provided and configured to convey the water from the water collection tank (4) towards the primary water tank (5) by means of a gaseous conveying medium, wherein a vacuum pump (30) for conveying the gaseous conveying medium from the primary water tank (5) is connected to the primary water tank (5) in terms of flow and/or an overpressure supply device (24) is connected to the water collection tank (4) in terms of flow for conveying the gaseous conveying medium towards the water primary tank (5), **characterised in that** the water collection tank (4) is connected to the primary water tank (5) in terms of flow both directly via the bypass line (17) and indirectly via the secondary water tanks (6, 7, 8) and a feed line (16), wherein the secondary water tanks are connected in series in terms of flow via the feed line (16) and the primary water tank (5) is connected directly in terms of flow via the feed line (16) to exactly one of the secondary water tanks (6, 7, 8).

2. Motor vehicle according to claim 1, **characterised in that** the primary water tank (5) is connected to the at least one water consumer (3) via a withdrawal line (19), which comprises a larger line cross-section than the connecting line (10), via which the at least one secondary water tank (6, 7, 8) is connected to the water collection tank (4) in terms of flow, and/or than the feed line (16), via which the primary water tank (5) is connected to the at least one secondary water tank (6, 7, 8) in terms of flow.

3. Motor vehicle according to one of the preceding claims, **characterised in that** the primary water tank (5) is connected to the at least one water consumer (3) via a workspace water tank (9).

4. Motor vehicle according to claims 2 and 3, **characterised in that** the withdrawal line (19) opens into the workspace water tank (9) and the workspace water tank (9) is connected to the primary water tank (5) via a supply line (18) which comprises a smaller cross-section than the withdrawal line (19).

5. Motor vehicle according to one of claims 1 or 3, **characterised in that** the primary water tank (5) and/or the workspace water tank (9) each comprise a heating device, and/or that the water collection tank (4) and/or the at least one secondary water tank (6, 7, 8) are each configured without heating.

6. Motor vehicle according to claim 2, **characterised in that** at least one of the following devices is present in the connecting line (10): filter (13), ion exchanger (14), quality sensor (15) and flushing pump (11).

7. Motor vehicle according to one of the preceding claims, **characterised in that** the water consumer (3) is a water injection system of a drive unit of the motor vehicle (1) or a windscreen cleaning device of the motor vehicle (1).

8. Method for operating a motor vehicle (1) according to one or more of the preceding claims, wherein the motor vehicle (1) has a water supply unit (2) for supplying water to at least one water consumer (3), with a water collection tank (4), a primary water tank (5), a plurality of secondary water tanks (6, 7, 8) connected to the water collection tank (4) via a connecting line (10), and a bypass line (17) which opens into the primary water tank (5) on the one hand and into the connecting line (10) on the other hand, and in which a switching valve (21) is arranged, wherein the water collection tank (4) is connected or can be connected to a water source in terms of flow and the primary water tank (5) is connected to the at least one water consumer (3) in terms of flow, bypassing the water collection tank (4) and the secondary water tanks (6, 7, 8), wherein the water supply unit (2) comprises a water conveying device (23) which is provided and configured to convey the water from the water collection tank (4) towards the primary water tank (5) by means of a gaseous conveying medium, wherein a vacuum pump (30) for conveying the gaseous conveying medium from the primary water tank (5) is connected to the primary water tank (5) in terms of flow and/or an overpressure supply device (24) is connected to the water collection tank (4) in terms of flow for conveying the gaseous conveying medium towards the water primary tank (5), **characterised in that** the water collection tank (4) is connected to the primary water tank (5) in terms of flow both directly via the bypass line (17) and indirectly via the secondary water tanks (6, 7, 8) and a feed line (16), wherein the secondary water tanks are connected in series in terms of flow via the feed line (16) and the primary water tank (5) is connected directly in terms of flow via the feed line (16) to exactly one of the secondary water tanks (6, 7, 8).

## Revendications

1. Véhicule à moteur (1) avec un dispositif de fourniture d'eau (2) pour la fourniture d'eau pour au moins un consommateur d'eau (3), avec un réservoir collecteur d'eau (4), un réservoir d'eau principal (5), plusieurs réservoirs d'eau secondaires (6, 7, 8) raccordés fluidiquement au réservoir collecteur d'eau (4) par l'intermédiaire d'une conduite de liaison (10) et une conduite de dérivation (17), laquelle débouche d'une part dans le réservoir d'eau principal (5), et d'autre part dans la conduite de liaison (10), et dans laquelle est disposée une soupape de commutation (21), dans lequel le réservoir collecteur d'eau (4) est raccordé ou raccordable fluidiquement à une source d'eau et le réservoir d'eau principal (5) est raccordé fluidiquement par contournement du réservoir collecteur d'eau (4) et des réservoirs d'eau secondaires (6, 7, 8) à l'au moins un consommateur d'eau (3), dans lequel le dispositif de fourniture d'eau (2) comprend un dispositif de transport d'eau (23), lequel est prévu et conçu pour le transport de l'eau à partir du réservoir collecteur d'eau (4) en direction du réservoir d'eau principal (5) au moyen d'un milieu de transport gazeux, dans lequel une pompe à vide (30) est raccordée fluidiquement au réservoir d'eau principal (5) pour le transport du milieu de transport gazeux à partir du réservoir d'eau principal (5) et/ou un dispositif de fourniture de surpression (24) est raccordé fluidiquement au réservoir collecteur d'eau (4) pour le transport du milieu de transport gazeux en direction du réservoir d'eau principal (5), **caractérisé en ce que** le réservoir collecteur d'eau (4) est raccordé fluidiquement au réservoir d'eau principal (5) aussi bien directement par l'intermédiaire de la conduite de dérivation (17) qu'indirectement par l'intermédiaire des réservoirs d'eau secondaires (6, 7, 8) et d'une conduite d'amenée (16), dans lequel les réservoirs d'eau secondaires sont branchés fluidiquement en série par l'intermédiaire de la conduite d'amenée (16) et le réservoir d'eau principal (5) est raccordé fluidiquement directement à exactement l'un des réservoirs d'eau secondaires (6, 7, 8) par l'intermédiaire de la conduite d'amenée (16).

2. Véhicule à moteur selon la revendication 1, **caractérisé en ce que** le réservoir d'eau principal (5) est raccordé fluidiquement à l'au moins un consommateur d'eau (3) par l'intermédiaire d'une conduite de prélèvement (19), laquelle présente une section transversale de conduite plus grande que celle de la conduite de liaison (10) par l'intermédiaire de laquelle l'au moins un réservoir d'eau secondaire (6, 7, 8) est raccordé fluidiquement au réservoir collecteur d'eau (4), et/ou que celle de la conduite d'amenée (16) par l'intermédiaire de laquelle le réservoir d'eau principal (5) est raccordé fluidiquement à l'au moins un réservoir d'eau secondaire (6, 7, 8).

3. Véhicule à moteur selon l'une des revendications précédentes, **caractérisé en ce que** le réservoir d'eau principal (5) est raccordé fluidiquement à l'au moins un consommateur d'eau (3) par l'intermédiaire d'un réservoir d'eau de travail (9).

4. Véhicule à moteur selon les revendications 2 et 3, **caractérisé en ce que** la conduite de prélèvement (19) débouche dans le réservoir d'eau de travail (9) et le réservoir d'eau de travail (9) est raccordé fluidiquement au réservoir d'eau principal (5) par l'intermédiaire d'une conduite d'alimentation (18), laquelle présente une section transversale de conduite plus petite que celle de la conduite de prélèvement (19).

5. Véhicule à moteur selon l'une des revendications 1 ou 3, **caractérisé en ce que** le réservoir d'eau principal (5) et/ou le réservoir d'eau de travail (9) comprennent respectivement un dispositif de chauffage, et/ou **en ce que** le réservoir collecteur d'eau (4) et/ou l'au moins un réservoir d'eau secondaire (6, 7, 8) sont configurés respectivement sans chauffage.

6. Véhicule à moteur selon la revendication 2, **caractérisé en ce qu'**au moins l'un des dispositifs suivants est présent dans la conduite de liaison (10) : filtre (13), échangeur d'ions (14), capteur de performance (15) et pompe de rinçage (11).

7. Véhicule à moteur selon l'une des revendications précédentes, **caractérisé en ce que** le consommateur d'eau (3) est une injection d'eau d'un groupe motopropulseur du véhicule à moteur (1) ou un dispositif de nettoyage des vitres du véhicule à moteur (1).

8. Procédé pour le fonctionnement d'un véhicule à moteur (1) selon une ou plusieurs des revendications précédentes, dans lequel le véhicule à moteur (1) dispose d'un dispositif de fourniture d'eau (2) pour la fourniture d'eau pour au moins un consommateur d'eau (3), avec un réservoir collecteur d'eau (4), un réservoir d'eau principal (5), plusieurs réservoirs d'eau secondaires (6, 7, 8) raccordés fluidiquement au réservoir collecteur d'eau (4) par l'intermédiaire d'une conduite de liaison (10) et une conduite de dérivation (17), laquelle débouche d'une part dans le réservoir d'eau principal (5), et d'autre part dans la conduite de liaison (10), et dans laquelle est disposée une soupape de commutation (21), dans lequel le réservoir collecteur d'eau (4) est raccordé ou raccordable fluidiquement à une source d'eau et le réservoir d'eau principal (5) est raccordé fluidiquement par contournement du réservoir collecteur d'eau (4) et des réservoirs d'eau secondaires (6, 7, 8) à l'au moins un consommateur d'eau (3), dans lequel le dispositif de fourniture d'eau (2) comprend un dispositif de transport d'eau (23), lequel est prévu et conçu pour le transport de l'eau à partir du réservoir collecteur d'eau (4) en direction du réservoir d'eau principal (5) au moyen d'un milieu de transport gazeux, dans lequel une pompe à vide (30) est raccordée fluidiquement au réservoir d'eau principal (5) pour le transport du milieu de transport gazeux à partir du réservoir d'eau principal (5) et/ou un dispositif de fourniture de surpression (24) est raccordé fluidiquement au réservoir collecteur d'eau (4) pour le transport du milieu de transport gazeux en direction du réservoir d'eau principal (5), **caractérisé en ce que** le réservoir collecteur d'eau (4) est raccordé fluidiquement au réservoir d'eau principal (5) aussi bien directement par l'intermédiaire de la conduite de dérivation (17) qu'indirectement par l'intermédiaire des réservoirs d'eau secondaires (6, 7, 8) et d'une conduite d'amenée (16), dans lequel les réservoirs d'eau secondaires sont branchés fluidiquement en série par l'intermédiaire de la conduite d'amenée (16) et le réservoir d'eau principal (5) est raccordé fluidiquement directement à exactement l'un des réservoirs d'eau secondaires (6, 7, 8) par l'intermédiaire de la conduite d'amenée (16).
